# DEMANDE DE BREVET EUROPEEN

(11) **EP 1 513 332 A1**
(43) Date de publication de la demande: **09.03.2005**
(21) Numéro de dépôt: 03292170.2
(22) Date de dépôt: 03.09.2003
(51) Int. Cl.: H04M 3/42

(54) **Système et procédé pour la fourniture d'un service de répertoire à des utilisateurs par l'intermédiaire d'un réseau de télécommunications**

(71) Demandeur: FRANCE TELECOM, 75015 Paris (FR)
(72) Inventeur: De Turenne, François, 22300 Lannion (FR); Fer, Pascale, 22300 Lannion (FR); Peral Lecha, Victor, 22560 Trebeurden (FR)
(74) Mandataire: Casalonga, Axel

(57) **Abrégé**

Pour fournir un service de répertoire à des utilisateurs, par l'intermédiaire d'un réseau de télécommunications, on utilise une première base de données (18) dans laquelle sont chargés, pour chaque utilisateur enregistré, au moins un compte d'utilisateur regroupant un ensemble de contacts, une plate-forme vocale (10) adaptée pour dialoguer avec les utilisateurs, la base de données (18) comprenant des entrées pour l'accès à chaque compte d'utilisateur à partir d'un identifiant de compte.

Une deuxième base de données (22), gérée par un serveur (20) de gestion, est utilisée pour fournir les identifiants de compte en fonction de critères d'accès prédéterminés.

## Description

La présente invention se rapporte aux réseaux de télécommunications et concerne plus particulièrement un système et un procédé pour fournir un service de répertoire à des utilisateurs, par l'intermédiaire d'un réseau de télécommunications.

La plupart des terminaux de téléphonie disposent d'une fonction de répertoire permettant de mémoriser un ensemble de numéros d'appels de correspondants, associés, le cas échéant à des informations complémentaires.

Tel est le cas aussi bien des terminaux fixes que des terminaux de téléphonie mobile.

Des moyens logiciels dûment programmés embarqués dans les téléphones se chargent de gérer l'accès aux répertoires, tant pour la consultation que pour leur modification.

Or, comme on le conçoit, l'incorporation du répertoire aux postes téléphoniques nécessite de dupliquer les informations qu'il contient lorsque l'on dispose de plusieurs postes, comme c'est souvent le cas.

Le but de l'invention est de pallier cet inconvénient et de fournir un système et un procédé pour la fourniture d'un service de répertoire téléphonique qui soit indépendant des terminaux de téléphonie.

Selon l'invention, il est donc proposé un système de fourniture d'un service de répertoire téléphonique à des utilisateurs par l'intermédiaire d'un réseau de télécommunications comprenant une première base de données dans laquelle sont chargés, pour chaque utilisateur enregistré, au moins un compte d'utilisateur regroupant un ensemble de contact, et une plate-forme vocale adaptée pour dialoguer avec les utilisateurs, la base de données comprenant des entrées pour l'accès à chaque compte d'utilisateur à partir d'un identifiant de compte.

Ce système comporte en outre un serveur de gestion des accès aux comptes d'utilisateurs qui comporte une deuxième base de données dans laquelle sont chargés, pour chaque utilisateur enregistré, le ou les identifiants de compte de l'utilisateur, ladite deuxième base de données étant accessible par l'utilisateur sous le contrôle du serveur de gestion des accès en fonction de critères d'accès prédéterminés.

Ainsi, en raison de l'incorporation des répertoires au sein d'une base de données distante hébergée dans une plate-forme accessible depuis le réseau de télécommunications, il est possible d'accéder à distance aux répertoires à partir de tout type de terminal, et ce, de façon sécurisée en raison du contrôle effectué par le serveur de gestion.

Selon une autre caractéristique de l'invention, le système comporte en outre un serveur de gestion des contacts assurant la gestion du contenu de la première base de données et la gestion des accès à cette première base de données.

En outre, un serveur d'authentification des utilisateurs peut être incorporé au système.

Dans ce cas, le serveur d'authentification comporte, selon un mode de réalisation, une troisième base de données dans laquelle sont chargées, pour chaque utilisateur enregistré, des données d'identification de l'utilisateur.

Selon une autre caractéristique de l'invention, les identifiants de comptes stockés dans la deuxième base de données sont regroupés sous la forme de listes d'au moins un identifiant de compte correspondant chacune à une ligne téléphonique affectée à l'utilisateur, le serveur de gestion des accès aux comptes d'utilisateurs comportant des moyens de discrimination des utilisateurs de la ligne téléphonique.

Dans ce cas, la deuxième base de données peut comporter, pour chaque utilisateur, un premier identifiant de compte correspondant à un accès au service de répertoire à partir de la ligne téléphonique dudit utilisateur et un deuxième identifiant de compte correspondant à un accès sécurisé audit service depuis une autre ligne téléphonique.

En outre, selon une autre caractéristique de l'invention, les moyens de discrimination utilisent des données de discrimination stockées dans la deuxième base de données. De tels moyens de discrimination peuvent comporter des moyens de reconnaissance d'empreinte vocale, à partir de modèles monolocuteurs mémorisés dans la deuxième base de données.

Selon une autre caractéristique du système selon l'invention, la plate-forme vocale comporte des moyens pour élaborer des ordres de commande, à destination du serveur de gestion des contacts et du serveur de gestion des accès aux comptes d'utilisateurs, qui sont transmis selon le protocole HTTP, les données transmises par le serveur de gestion des contacts et par le serveur de gestion des accès aux comptes d'utilisateurs étant transmises selon le langage XML (eXtensible Markup Language).

Selon encore une autre caractéristique de l'invention, le serveur de gestion des contacts est accessible par les utilisateurs depuis le réseau Internet pour accéder à la première base de données. Il est alors possible de modifier les répertoires à distance, par exemple au moyen d'un ordinateur.

Le serveur de gestion des accès aux comptes d'utilisateurs peut en outre comporter des moyens de traitement de commandes reçues en provenance de la plate-forme vocale pour la sélection de comptes d'utilisateurs.

Selon l'invention, il est également proposé un procédé pour la fourniture d'un service de répertoire à un utilisateur par l'intermédiaire d'un réseau de télécommunications, mis en oeuvre au moyen d'un système tel que défini ci-dessus, caractérisé en ce qu'il comporte les étapes de :
- appel de la plate-forme vocale depuis un poste de télécommunication équipant une ligne téléphonique ;
- interrogation du serveur de gestion des accès aux comptes d'utilisateurs pour récupérer un identifiant de compte lié au numéro d'appel de la ligne téléphonique ;
- récupération de l'identifiant de compte ; et
- interrogation du serveur de gestion des contacts pour récupérer la liste des contacts correspondant à l'identifiant de compte.

Selon un mode de mise en oeuvre, au cours de l'étape d'interrogation du serveur de gestion des accès aux comptes d'utilisateurs, on procède à une discrimination entre les comptes d'utilisateurs associés à la ligne téléphonique.

Selon une autre caractéristique du procédé selon l'invention, celui-ci comporte en outre une étape d'authentification de l'utilisateur préalable à la récupération de l'identifiant pour la récupération de l'identifiant de compte depuis une autre ligne téléphonique.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est un schéma synoptique illustrant l'architecture générale d'un système de fourniture d'un répertoire téléphonique conforme à l'invention ; et
- la figure 2 est un organigramme illustrant les principales phases du procédé de fourniture de répertoire conformément à l'invention.

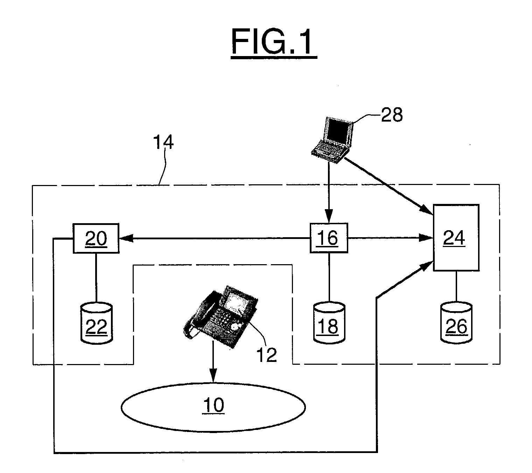

En référence à la figure 1, le système de fourniture d'un service de répertoire, conforme à l'invention, comprend une plate-forme vocale 10 adaptée pour entrer en communication, en mode vocal, avec des postes téléphoniques 12 d'utilisateurs, ainsi qu'une plate-forme de répertoires 14 consultable depuis le poste téléphonique 12, par l'intermédiaire de la plate-forme vocale 10.

La plate-forme de répertoires 14 comporte un serveur de gestion des contacts 16 associé à une première base de données 18 dont l'accès est géré par le serveur 16 de gestion des contacts et qui comporte, pour chaque utilisateur enregistré, une liste de comptes d'utilisateur regroupant chacun une ou plusieurs listes de contacts. Ainsi, par exemple, pour chaque utilisateur enregistré, la base de données 18 comporte plusieurs comptes regroupant chacun une ou plusieurs listes de contacts, chaque compte et/ou liste de contact correspondant par exemple à une activité ou à un centre d'intérêt de l'utilisateur.

L'accès à ces différents comptes s'effectue sous le contrôle d'un serveur 20 de gestion des accès. Ce serveur 20 est associé à une deuxième base de données 22 dans laquelle est chargée pour chaque utilisateur, une liste d'identifiants de compte correspondant chacun à un compte d'utilisateur stocké dans la base de données 18, chacun de ces identifiants étant associé, au sein de la base de données 22, à des informations de restriction d'accès paramétrables par l'utilisateur. Comme cela sera décrit en détail par la suite, par exemple, ces comptes sont affectés aux numéros téléphoniques des abonnés et peuvent être récupérés à partir de ces numéros.

Enfin, un serveur d'authentification 24 associé à une troisième base de données 26 dans laquelle sont chargées des données d'identification des utilisateurs, est utilisé pour identifier de manière certaine les utilisateurs afin de leur permettre d'accéder au contenu de la première base de données 18.

Les moyens d'authentification mis en oeuvre par le serveur d'authentification 24 et par la base de données 26 correspondante peuvent être constitués par tous types de moyens d'authentification appropriés pour l'utilisation envisagée. Cependant, des moyens d'authentification par code d'abonné et code secret permettent d'assurer une authentification relativement efficace des utilisateurs.

En ce qui concerne les données stockées dans la deuxième base de données 22, qui sont constituées par des listes d'identifiants de comptes associées chacune à un utilisateur, on notera que, de préférence, les utilisateurs sont identifiés au sein de cette base de données 22 sous la forme de leur numéro de téléphone, à chaque numéro de téléphone étant associée une liste d'identifiants de compte.

Ainsi, la consultation de la plate-forme de répertoire 14 peut s'effectuer soit en mode « local », c'est-à-dire directement par appel à partir du poste téléphonique 12 lié à la ligne téléphonique de l'abonné utilisateur, soit en mode « distant », c'est-à-dire à partir d'une autre ligne. La consultation peut enfin être effectuée en mode « personnel » lié au fait que les identifiants de compte associés à un numéro de téléphone peuvent correspondrent à des comptes de plusieurs utilisateurs d'une même ligne et que de même, ces identifiants peuvent correspondre à des comptes d'un seul utilisateur.

Le mode d'accès « local » correspond à un mode de fonctionnement selon lequel l'abonné appelle le service de fourniture de répertoire depuis sa ligne fixe et utilise un compte principal correspondant à son compte d'abonné pour récupérer les contacts qui l'intéressent.

Le mode « personnel » correspond à un mode de fonctionnement selon lequel l'utilisateur, qui appelle le service depuis sa propre ligne téléphonique, accède à d'autre comptes, ou comptes secondaires, pour lesquels le serveur de gestion des accès 20 a été configuré de manière à réclamer une authentification préalable.

Enfin, comme indiqué précédemment, le mode « distant » correspond à un mode de fonctionnement selon lequel l'utilisateur appelle le service depuis une autre ligne téléphonique et doit fournir des informations supplémentaires pour s'identifier auprès du serveur, comme par exemple son numéro de ligne téléphonique.

On notera que la sélection du mode de fonctionnement de la plate-forme de répertoire 14 s'effectue à partir d'ordres de commande énoncés par l'utilisateur et traduits par la plate-forme vocale 10 en ordres de commande destinés à être traités par le serveur de gestion des accès 20 et par le serveur de gestion de contacts 16.

A cet égard, on notera que la plate-forme vocale 10 communique avec ces serveurs 16 et 20 selon un protocole http/XML, des requêtes de consultation ou des ordres de commande étant transmis à destination de ces serveurs 16 et 20 selon le protocole http (Hyper Text Transfert Protocole) alors que des données transmises des serveurs 16 et 20 vers la plate-forme vocale 10 se présentant selon le langage XML (eXtensible Markup Language). On notera enfin que le serveur de gestion des contacts 16 est accessible par l'intermédiaire du réseau Internet, par exemple depuis un ordinateur distant 28, de manière à saisir ou consulter directement des données dans la première base de données 18.

Comme indiqué précédemment, les données stockées dans la deuxième base de données 22 permettent d'identifier et récupérer les comptes d'utilisateurs stockés dans la première base de données et sont associées chacune à des informations de restriction d'accès. Ces informations de restriction d'accès sont paramétrables par l'utilisateur soit au moyen d'ordres de commande énoncés depuis le poste téléphonique 12, soit depuis l'ordinateur distant 28, et sont consultables soit en mode local, soit en mode distant. On notera que chaque identifiant peut être associé à des informations de restriction d'accès spécifiques correspondant, les unes à un mode d'accès local, et les autres à un mode d'accès distant, de manière à, par exemple, autoriser librement l'accès aux bases de données 18 lorsque l'on utilise la ligne téléphonique à laquelle on est abonné et à restreindre l'accès à ces informations uniquement aux utilisateurs préalablement identifiés au moyen du serveur d'authentification 24, lorsque l'on utilise le mode d'accès distant.

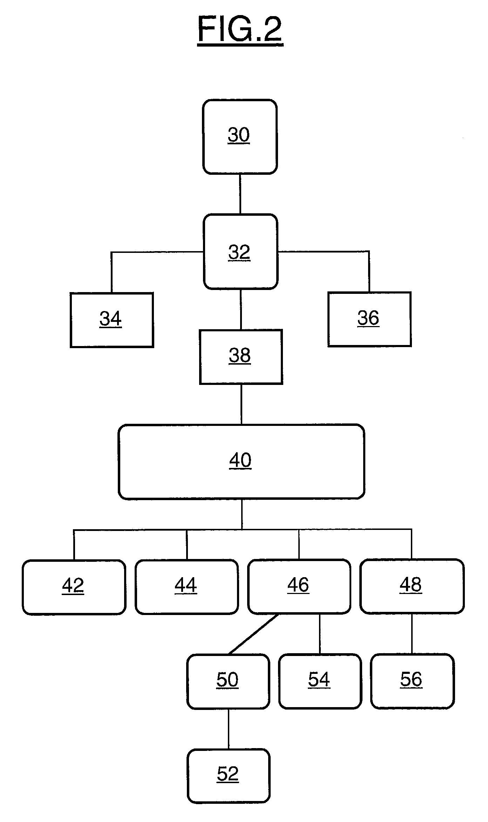

On va maintenant décrire en référence à la figure 2 les principales phases de fonctionnement du procédé de fourniture de répertoire conforme à l'invention.

Comme on le voit sur cette figure, ce procédé débute par une première étape 30 au cours de laquelle l'utilisateur appelle la plate-forme vocale 10 à l'aide d'un poste téléphonique 12. Lors de l'étape 32 suivante, la plate-forme vocale 10 interroge le serveur de gestion des accès 20 de manière à récupérer la liste des comptes d'utilisateurs associés à la ligne appelante.

Dans le cas où aucun compte n'est récupéré, le serveur 10 propose à l'utilisateur un mode de fonctionnement distant (étape 34). Dans le cas où plusieurs comptes sont récupérés mais qu'aucun compte ne correspond à l'abonné de la ligne appelante, le serveur 10 propose à l'utilisateur un accès en mode personnel (étape 36).

Enfin, dans le cas où plusieurs comptes sont récupérés et que l'un des comptes correspond à l'abonné de la ligne appelante, la plate-forme 10 se positionne en mode d'accès local (étape 38) puis interroge, le cas échéant, le serveur de gestion des contacts 16 pour mettre en oeuvre le serveur d'authentification 24 afin d'identifier l'utilisateur appelant.

Après authentification, lors de l'étape 40 suivante, la plate-forme vocale 10 invite l'utilisateur à énoncer des commandes de manière à soit établir directement une communication avec l'un des contacts de son compte (étape 42), soit consulter son compte (étape 44), soit lancer un mode fonctionnement « personnel » (étape 46), soit lancer un mode de fonctionnement distant (étape 48).

Dans le cas où le mode de fonctionnement « personnel » est sélectionné, la plate-forme 10 invite l'utilisateur à entrer son code d'abonné (étape 50) puis son mot de passe (étape 52) ou directement son mot de passe (étape 54) afin de réaliser une identification préalable de l'abonné avant de permettre un accès aux autres comptes associés à la ligne fixe de l'abonné.

De même, lorsque le mode d'accès distant a été sélectionné lors de l'étape 48 précédente, la plate-forme vocale 10 demande à l'utilisateur d'entrer son mot de passe (étape 56) afin de procéder à une identification préalable de l'abonné avant de permettre un accès aux comptes liés à la ligne téléphonique.

A l'issue de ces étapes, après avoir récupéré l'identifiant de compte, la plate-forme interroge le serveur de gestion des contacts 16 de manière à récupérer la liste des contacts correspondants à partir de la première base de données 18.

On va maintenant décrire ci-dessous différents exemples de scénarios d'utilisation du système qui vient d'être décrit.

### Exemple 1 :

Un utilisateur souhaite joindre l'un des contacts enregistrés dans un compte principal. Pour ce faire, il appelle la plate-forme vocale 10 en utilisant sa ligne téléphonique personnelle. Un message de bienvenue est alors fourni par la plate-forme 10. Parallèlement, la plate-forme vocale 10 interroge le serveur de gestion des accès 20 pour retrouver la liste des comptes associée à cette ligne. Par exemple, plusieurs comptes sont trouvés, parmi lesquels un compte principal du titulaire est identifié.

Dans le cas ou ce compte principal est verrouillé par un mot de passe, la plate-forme vocale 10 demande à l'utilisateur d'énoncer son mot de passe. Après vérification du mot de passe au moyen du serveur d'authentification 24, la plate-forme vocale 10 récupère l'identifiant de compte pour extraire de la première base de données 18 la liste de contacts correspondant à ce compte principal. La plate-forme 10 demande alors, parmi la liste de ces contacts, celui que l'utilisateur souhaite appeler. Il peut alors être procédé à l'établissement automatique d'une liaison téléphonique vers le contact sélectionné par l'utilisateur.

### Exemple 2 :

Un utilisateur abonné au service souhaite joindre un contact d'un compte secondaire et demande, en cours de procédure, un basculement du compte principal vers le compte secondaire.

Dans ce cas, après récupération de l'ensemble des contacts liés à un compte, et après que l'utilisateur ait énoncé un ordre de commande de basculement du compte principal vers le compte secondaire, la plate-forme demande à l'utilisateur d'énoncer son code d'abonné puis son mot de passe. Après authentification par le serveur d'authentification 24 par comparaison avec un code d'abonné et un mot de passe mémorisé dans la troisième base 26, le numéro d'utilisateur est utilisé pour récupérer l'identifiant de compte correspondant au numéro d'utilisateur. La plate-forme vocale utilise alors ce numéro d'identifiant pour retrouver la liste des contacts de ce compte.

La plate-forme vocale demande alors à l'utilisateur le contact qu'il souhaite appeler, parmi l'ensemble des contacts de ce compte secondaire. Il peut alors être procédé, comme précédemment, à une mise en relation automatique de l'abonné avec le contact sélectionné.

### Exemple 3 :

Un utilisateur appelle depuis une ligne téléphonique le serveur d'appels 10. Le serveur récupère alors une liste de comptes associée à l'utilisateur. Il est alors procédé à une reconnaissance automatique de l'utilisateur en utilisant un modèle de reconnaissance vocale monolocuteur pour identifier l'appelant et sélectionner, parmi le comptes associés à la ligne téléphonique, ceux qui correspondent à l'utilisateur appelant.

## Revendications

1. Système pour la fourniture d'un service de répertoire à des utilisateurs, par l'intermédiaire d'un réseau de télécommunications, **caractérisé en ce qu'**il comporte une première base de données (18) dans laquelle sont chargés, pour chaque utilisateur enregistré, au moins un compte d'utilisateur regroupant un ensemble de contacts, et une plate-forme vocale (10) adaptée pour dialoguer avec les utilisateurs, la base de donnée comprenant des entrées pour l'accès à chaque compte d'utilisateur à partir d'un identifiant de compte, et **en ce qu'**il comprend en outre un serveur (20) de gestion des accès aux comptes d'utilisateurs qui comporte une deuxième base de données (22) dans laquelle sont chargées, pour chaque utilisateur enregistré, le ou les identifiants de compte de l'utilisateur, ladite deuxième base de données (22) étant accessible par l'utilisateur sous le contrôle du serveur (20) de gestion des accès en fonction de critères d'accès prédéterminés.

2. Système selon la revendication 1, **caractérisé en ce qu'**il comporte un serveur (16) de gestion des contacts assurant la gestion du contenu de la première base de données et la gestion des accès à cette première base de données.

3. Système selon l'une des revendications 1 et 2, **caractérisé en ce qu'**il comporte en outre un serveur (24) d'authentification des utilisateurs.

4. Système selon la revendication 3, dépendante de la revendication 2, **caractérisé en ce que** le serveur d'authentification comporte une troisième base de données (26) dans laquelle sont chargées, pour chaque utilisateur enregistré, des données d'identification de l'utilisateur.

5. Système selon l'une quelconque des revendications 1 à 4, **caractérisé en ce que** les identifiants de comptes stockés dans la deuxième base de données sont regroupés sous la forme de listes d'au moins un identifiant de compte correspondant chacune à une ligne téléphonique affectée à l'utilisateur, et **en ce que** le serveur (20) de gestion des accès aux comptes d'utilisateurs comporte des moyens de discrimination des utilisateurs de la ligne téléphonique.

6. Système selon la revendication 5, **caractérisé en ce que** la deuxième base de données comporte, pour chaque utilisateur, un premier identifiant de compte correspondant à un accès au service de répertoire à partir de la ligne téléphonique dudit utilisateur et un deuxième identifiant de compte correspondant à un accès sécurisé audit service depuis une autre ligne téléphonique.

7. Système selon l'une des revendications 5 et 6, **caractérisé en ce que** les moyens de discrimination utilisent des données de discrimination stockées dans la deuxième base de données (22).

8. Système selon la revendication 7, **caractérisé en ce que** les moyens de discrimination comportent des moyens de reconnaissance d'empreintes vocales à partir de modèles monolocuteurs mémorisés dans la deuxième base de données.

9. Système selon l'une quelconque des revendications 2 à 8, **caractérisé en ce que** la plate-forme vocale (10) comporte des moyens pour élaborer des ordres de commande, à destination du serveur (16) de gestion des contacts et du serveur (20) de gestion des accès aux comptes d'utilisateurs, qui sont transmises selon le protocole HTTP, et **en ce que** les données transmises par le serveur (16) de gestion des contacts et par le serveur (20) de gestion des accès aux comptes d'utilisateurs sont transmises selon le langage XML.

10. Système selon l'une quelconque des revendications 2 à 9, **caractérisé en ce que** le serveur de gestion des contacts est accessible par les utilisateurs depuis le réseau Internet pour accéder à la première bases de données (18).

11. Système selon l'une quelconque des revendication 1 à 10, **caractérisé en ce que** le serveur de gestion des accès aux comptes d'utilisateurs comporte des moyens de traitement de commandes reçues en provenance de la plate-forme vocale pour la sélection de comptes d'utilisateurs.

12. Procédé pour la fourniture à un utilisateur d'un service de répertoire par l'intermédiaire d'un réseau de télécommunications, mis en oeuvre au moyen d'un système selon l'une quelconque des revendications 1 à 11, **caractérisé en ce qu'**il comporte les étapes de :
- appel de la plate-forme vocale (10) depuis un poste de télécommunication équipant une ligne téléphonique ;
- interrogation du serveur (20) de gestion des accès aux comptes d'utilisateurs pour récupérer un identifiant de compte lié au numéro d'appel de la ligne téléphonique ;
- récupération de l'identifiant de compte ; et
- interrogation du serveur (16) de gestion des contacts pour récupérer la liste des contacts correspondants à l'identifiant de compte.

13. Procédé selon la revendication 12, **caractérisé en ce qu'**au cours de l'étape d'interrogation du serveur de gestion des accès aux comptes d'utilisateurs, on procède à une discrimination entre les comptes d'utilisateurs associés à la ligne téléphonique.

14. Procédé selon l'une des revendications 12 et 13, **caractérisé en ce qu'**il comporte en outre une étape d'authentification de l'utilisateur préalable à la récupération de l'identifiant pour la récupération de l'identifiant de compte depuis une autre ligne téléphonique.
